# EUROPEAN PATENT SPECIFICATION

(11) **EP 2 570 634 B1**
(45) Date of publication and mention of the grant of the patent: **05.11.2014**
(21) Application number: 10851370.6
(22) Date of filing: 10.05.2010
(51) Int. Cl.: F02D 13/02, F01N 3/20, F02D 21/08

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 20.03.2013
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi, Aichi-ken, 471-8571 (JP); ISHIYAMA, Shinobu, Toyota-shi, Aichi-ken, 471-8571 (JP); OGAWA, Takashi, Toyota-shi, Aichi-ken, 471-8571 (JP); ITO, Katsuhiro, Toyota-shi, Aichi-ken, 471-8571 (JP); IWATA, Kazuyasu, Toyota-shi, Aichi-ken, 471-8571 (JP); YANASE, Yoshinori, Toyota-shi, Aichi-ken, 471-8571 (JP)
(74) Representative: Intès, Didier Gérard André
(86) International application number: PCT/JP2010/057889
(87) International publication number: WO 2011/141987

(56) References cited:
- WO-A1-2008/090162
- WO-A1-2009/019579
- WO-A2-2010/041110
- DE-A1- 10 348 366
- DE-A1- 19 913 316
- DE-A1-102007 006 937
- JP-A- 11 166 435
- JP-A- 2002 221 029
- JP-A- 2010 019 211
- US-A1- 2007 250 256

## Description

### Technical Field

The present invention relates to a control device for an internal combustion engine.

### Background Art

A conventionally known internal combustion engine control device disclosed, for instance, in JP-A-1999-166435 raises the temperature of a catalyst by supplying CO to the catalyst. When the catalyst temperature is to be raised, this conventional control device increases the amount of external EGR (exhaust gas recirculation). Increasing the amount of external EGR increases the amount of CO that flows into the catalyst. This CO causes a reaction in the catalyst to increase the catalyst temperature.

DE 19913316 raises catalyst temperature via internal EGR.

### Prior Art Literature

### Patent Documents

Patent Document 1: JP-A-1999-166435
Patent Document 2: International Publication No. 2005/56995
Patent Document 3: JP-A-2006-336466
Patent Document 4: JP-A-2007-262968

### Summary of the Invention

### Technical Problem

Either an external EGR method or an internal EGR method may be used to supply an EGR gas to an internal combustion engine. The amount of internal EGR may be increased by controlling a variable valve device in such a manner as to change valve timing. If a large amount of EGR gas is supplied, driveability may deteriorate due to a misfire or excessive torque fluctuation. Hence, the variable valve device may be controlled so as to adjust the amount of internal EGR, raise a compression end temperature, and achieve adequate ignition quality. However, the above ideas do not work if an internal combustion engine mounted, for instance, on an automobile deviates from a steady state during actual use. No judgment standard is not established to determine in such a situation what to detect and how to control the variable valve device. In reality, it is difficult to determine how to control the variable valve device and what characteristics the valve timing should be set for. In view of the above circumstances, the inventors of the present invention have devoted themselves to studies and found a suitable method of adjusting the amount of internal EGR by controlling the variable valve device.

The present invention has been made to solve the above problem. An object of the present invention is to provide an internal combustion engine control device that is capable of satisfying a demand for raising the temperature of a catalyst by controlling a variable valve device in such a manner as to adjust the amount of internal EGR.

### Solution to Problem

To achieve the above-mentioned purpose, a first aspect of the present invention is a control device for an internal combustion engine according to claim 1.

### Advantages of the Invention

When the temperature of a catalyst is to be raised, the first aspect of the present invention makes it possible to supply a large amount of CO to the catalyst by increasing the amount of EGR. Meanwhile, if it is anticipated that misfiring may occur due to an increase in the amount of EGR, the degree of timing advance can be reduced to prevent misfiring.

### Brief Description of Drawings

FIG. 1 is a diagram for describing the configuration of an internal combustion engine control device according to an embodiment of the present invention.
FIG. 2 is a diagram illustrating the operations of the internal combustion engine control device according to an embodiment of the present invention.
FIG. 3 is a diagram illustrating the operations of the internal combustion engine control device according to an embodiment of the present invention.
FIG. 4 is a diagram illustrating the operations of the internal combustion engine control device according to an embodiment of the present invention.
FIG. 5 is a diagram illustrating the operations of the internal combustion engine control device according to an embodiment of the present invention.
FIG. 6 is a flowchart illustrating a routine that is executed by the ECU in accordance with an embodiment of the present invention.

### Reference Signs List

- 10: a diesel engine
- 12: a fuel injector
- 20: an exhaust manifold
- 34: an intake manifold
- 52: an intake valve
- 54: an intake variable valve device
- 56: an exhaust valve
- 58: an exhaust variable valve device
- 60: a crankshaft
- 62: a crank angle sensor
- 64: a piston
- 200: A/F suitability range

### Best Mode for Carrying Out the Invention

### Description of Embodiments

### [Configuration of Embodiments]

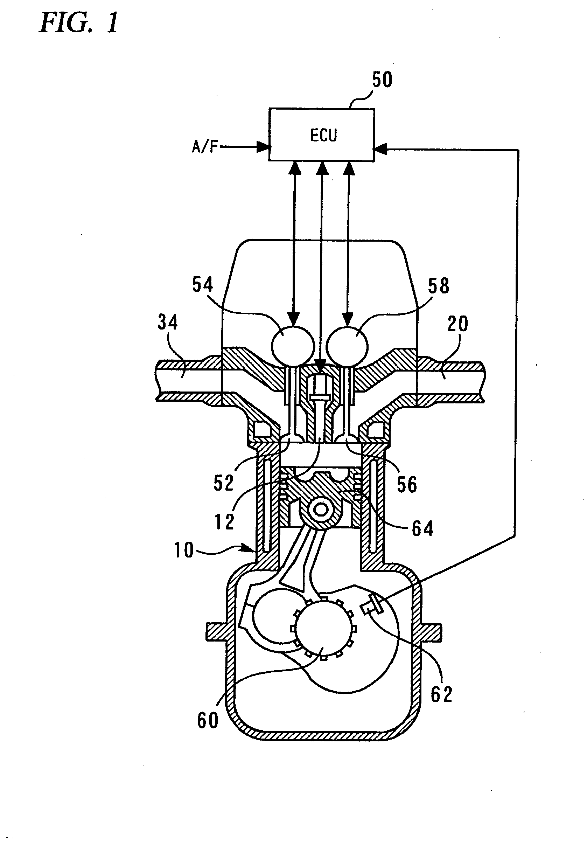

FIG. 1 is a diagram for describing the configuration of an internal combustion engine control device according to an embodiment of the present invention. FIG. 1 is a cross-sectional view illustrating a cylinder of a diesel engine (compression ignition internal combustion engine) to which the control device according to the present embodiment is applied. The diesel engine 10 is mounted, for instance, on a vehicle and used as a motive power source for the vehicle. The diesel engine 10 according to the present embodiment is an in-line four-cylinder engine. However, the present invention does not specifically define the number of cylinders or the arrangement of the cylinders.

Each cylinder of the diesel engine 10 is provided with a fuel injector 12 that directly injects fuel into the cylinder. The injector 12 for each cylinder is connected to a common rail (not shown).

Each cylinder of the diesel engine 10 is in communication with an intake manifold 34. An air cleaner disposed near the inlet of an intake path, an air flow meter disposed near a downstream end of the air cleaner to detect an intake air amount, and various other components are installed upstream of the intake manifold 34. An exhaust gas discharged from each cylinder of the diesel engine 10 is collected by an exhaust manifold 20 and flowed into an exhaust path.

The intake manifold 34 and the exhaust manifold 20 are connected to a combustion chamber of the diesel engine 10. An intake port between the intake manifold 34 and the combustion chamber is opened and closed by an intake valve 52. An exhaust port between the exhaust manifold 20 and the combustion chamber is opened and closed by an exhaust valve 56.

The diesel engine 10 according to the present embodiment includes an exhaust variable valve device 58, which can change the valve opening characteristics of the exhaust valve 56. The exhaust variable valve device 58 according to the present embodiment may be configured in any manner as far as it changes at least the closing timing of the exhaust valve 56. In the present embodiment, the exhaust valve 56 closes early to increase the amount of gas remaining in a cylinder, that is, to increase the amount of internal EGR. This increases the amount of CO that flows into a catalyst. The CO causes a reaction in the catalyst to raise the temperature of the catalyst.

Referring to the configuration shown in FIG. 1, the diesel engine 10 further includes an intake variable valve device 54, which can change the valve opening characteristics of the intake valve 52. For the sake of simplicity of description, the terms "variable valve timing" and "variable valve timing control" may be hereinafter referred to as "VVT" and "VVT control," respectively.

As shown in FIG. 1, a crank angle sensor 62, which detects the rotation angle (crank angle) of a crankshaft 60, is mounted near the crankshaft 60 for the diesel engine 10. The crankshaft 60 is coupled to a piston 64.

The system according to the present embodiment includes an ECU (electronic control unit) 50. In addition to the aforementioned sensors and actuators, an accelerator opening sensor, which detects an accelerator opening, that is, the position of an accelerator pedal installed below a driver's seat, is electrically connected to the ECU 50. Upon receipt of the outputs of various sensors, the ECU 50 operates various actuators in accordance with a predetermined program to control the operating status of the diesel engine 10.

A sensor value of the crank angle sensor 62 is input into the ECU 50. In accordance with an output signal of the crank angle sensor 62, the ECU 50 detects an engine speed. The ECU 50 stores a routine that calculates a torque fluctuation amount from a fluctuation in the engine speed (rotational fluctuation). A cylinder pressure sensor may be installed to detect a torque fluctuation (misfiring) in accordance with the value of the cylinder pressure sensor.

It is assumed that the present embodiment includes a configuration for detecting an air-fuel ratio. The air-fuel detection configuration may be implemented, for instance, by providing an exhaust system with an air-fuel ratio sensor and enabling the ECU 50 to detect the air-fuel ratio in accordance with the value of the air-fuel ratio sensor. An alternative is to calculate the air-fuel ratio from an intake air amount and a fuel injection amount.

. Although not shown in FIG. 1, the diesel engine 10 according to the present embodiment also includes the following components. Specifically, the diesel engine 10 includes a turbocharger that provides supercharging by using the energy of the exhaust gas. The turbocharger includes a turbine, which is rotated by the energy of the exhaust gas, and a compressor, which is driven and rotated by the turbine. The turbine is disposed in the middle of the exhaust path. The compressor is disposed in the middle of the intake path.

The catalyst is installed in the exhaust path downstream of the turbine. As the catalyst, for example, a NOx catalyst, which captures and stores NOx contained in the exhaust gas of the diesel engine 10, may be installed.

An inter-cooler is installed in the intake path downstream of the compressor. Fresh air taken in through the air cleaner is compressed by the compressor of the turbocharger, and then cooled by the inter-cooler. The fresh air passing through the inter-cooler flows into each cylinder through the intake manifold 34.

The diesel engine 10 also includes an external EGR device for providing external EGR (exhaust gas recirculation) in which part of the exhaust gas flows back to the intake path. The external EGR device includes an EGR path, which connects the exhaust system to an intake system, and an EGR valve, which is installed in the middle of the EGR path. The external EGR device may include two different EGR paths, namely, a high-pressure EGR path for providing high-pressure EGR and a low-pressure EGR path for providing low-pressure EGR.

### [Operations of Embodiments]

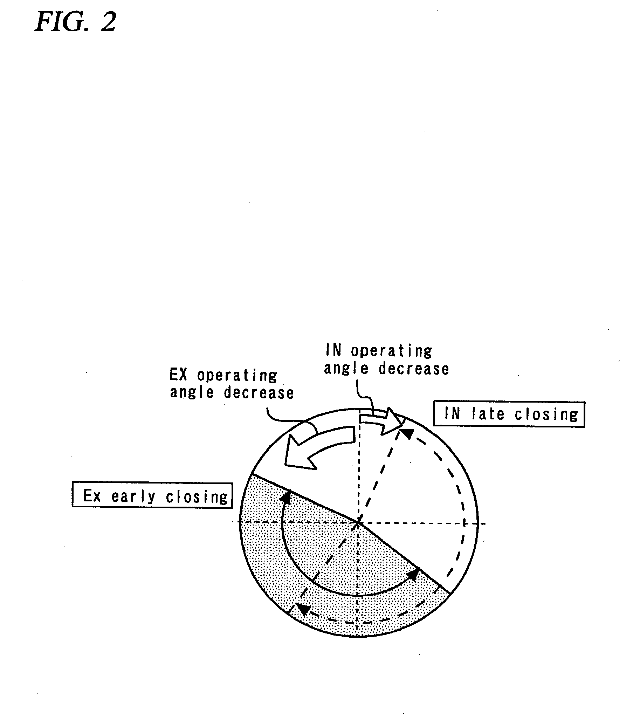

FIGS. 2 to 5 are diagrams illustrating the operations of the internal combustion engine control device according to an embodiment of the present invention. For explanation purposes, the operation of the internal combustion engine control device according to the present embodiment is divided into "raising a catalyst bed temperature on the basis of variable valve timing (VVT)," "exercising autonomous control (FB control) on the basis of variable valve timing (VVT)," and "compensating for the deficiency in the amount of EGR with the external EGR device."

### (1) Raising a catalyst bed temperature on the basis of variable valve timing (VVT)

A large amount of EGR can be used for combustion (e.g., low-temperature combustion (LTC)) in order to supply a large amount of CO to the catalyst, cause a CO reaction in the catalyst, and raise the temperature of the catalyst. However, when a large amount of EGR gas is supplied, it is anticipated that ignition quality may deteriorate due to a rich air-fuel ratio and oxygen deficiency. Ignition quality deterioration may cause misfiring.

Either an external EGR method or an internal EGR method may be used to supply the EGR gas to the internal combustion engine. When the external EGR method is used, it is difficult in reality to successfully complete the above operation. Meanwhile, when VVT is used, the exhaust valve can be closed early to increase the amount of internal EGR. When the amount of high-temperature internal EGR is increased, a compression end temperature can be raised, and thereby makes it possible to maintain adequate ignition quality instead of the increase in the amount of EGR gas. A large amount of EGR can be subjected to combustion by utilizing the effect of internal EGR. Hence, a catalyst bed temperature increase method based on the supply of CO can be practically used.

In the present embodiment, therefore, the catalyst temperature is raised by controlling the exhaust variable valve device 58 in such a manner as to increase the amount of internal EGR. FIG. 2 is a diagram illustrating the valve opening characteristics of the exhaust valve 56 and intake valve 52 according to an embodiment of the present invention. In the present embodiment, the exhaust valve 56 closes early as indicated by an arrow and by the term "EX operating angle decrease." In addition, the intake valve 52 is also operated to close late as indicated in FIG. 2 by an arrow and by the term "IN operating angle decrease" in the present embodiment.

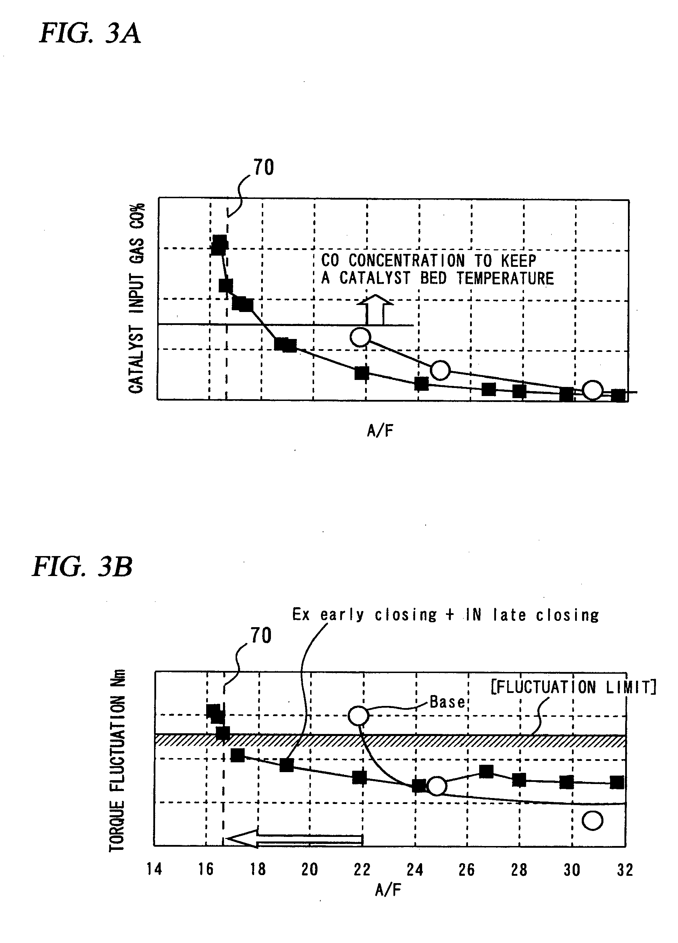

FIGS. 3A and 3B are schematic diagrams illustrating how a large amount of EGR (having a rich air-fuel ratio) is successfully burned on the basis of VVT. FIG. 3A shows the relationship between the CO concentration (%) and air-fuel ratio of a gas flowing into the catalyst (this gas may be simply referred to as the "catalyst input gas"). FIG. 3B shows the relationship between the magnitude (Nm) of torque fluctuation and the air-fuel ratio. In FIG. 3B, it is assumed that the torque fluctuation labeled "fluctuation limit" denotes a predetermined maximum permissible amount of torque fluctuation.

Behavior exhibited while VVT control is not utilized is indicated by white circular points and their approximate lines (lines marked "Base") in FIGS. 3A and 3B. Meanwhile, behavior exhibited while a control operation is performed in accordance with the present embodiment is indicated by black rectangular points (these points are marked "Ex early closing + IN late closing" for the sake of convenience).

If VVT control is not utilized, enriching the air-fuel ratio (increasing the amount of EGR) for an increase in the amount of CO causes misfiring and increases torque fluctuation. As a result, the torque fluctuation exceeds the fluctuation limit as shown in FIG. 3B (refer to the characteristics indicated by the line marked "Base") while the CO concentration of the catalyst input gas is not so high as shown in FIG. 3A.

On the other hand, according to the present embodiment that utilizes VVT control, the compression end temperature can be raised by closing the exhaust valve early so as to increase the amount of EGR. This makes it possible to maintain adequate ignition quality and enrich the air-fuel ratio so as to supply a sufficient amount of CO. More specifically, the air-fuel ratio can be sufficiently enriched, as indicated by the arrow in the FIG. 3B, to a level marked by the reference numeral 70 in FIGS. 3A and 3B. The behavior of the control operation according to the present embodiment permits the CO concentration of the catalyst input gas to significantly increase as shown in FIG. 3A without allowing the torque fluctuation to exceed the fluctuation limit as shown in FIG. 3B (refer to the characteristics indicated by the line marked "Ex early closing + IN late closing").

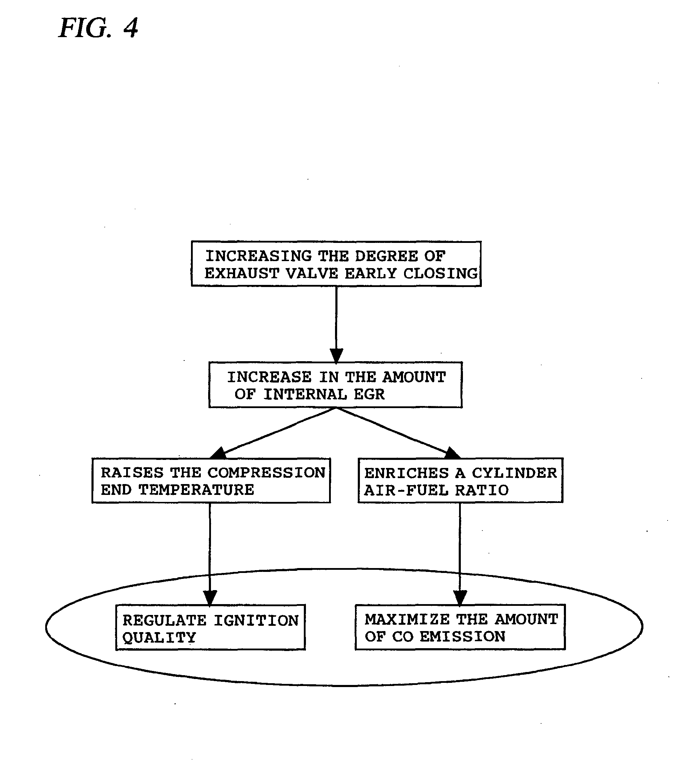

FIG. 4 is a schematic diagram outlining the above-described control operation according to the present embodiment that is performed for "raising a catalyst bed temperature on the basis of variable valve timing (VVT)," The amount of internal EGR can be increased by increasing the degree of exhaust valve early closing (Ex early closing). An increase in the amount of internal EGR raises the compression end temperature and enriches a cylinder air-fuel ratio. An increase in the compression end temperature contributes to ignition quality improvement. Enriching the cylinder air-fuel ratio contributes to an increase in the amount of CO emission, that is, to an increase in the CO concentration of the catalyst input gas. In this manner, VVT control can be exercised to regulate ignition quality and a catalyst input CO amount.

Alternatively, an exhaust temperature itself may be raised, for instance, by advancing the exhaust valve phase on the basis of VVT. However, even when the exhaust temperature is raised, the resulting heat is transferred to an exhaust pipe or transferred to a turbine when a turbocharger is provided. As a result, the efficiency of raising the catalyst bed temperature is low. Thus, it is anticipated that fuel efficiency may decrease. Meanwhile, the supply of CO makes it possible to cause a reaction in the catalyst, thereby raising the catalyst bed temperature. Consequently, the method of raising the catalyst bed temperature by supplying CO is more advantageous in terms of fuel efficiency than the method of raising the exhaust temperature.

### (2) Exercising autonomous control (FB control) on the basis of variable valve timing (VVT)

Increasing the amount of internal EGR on the basis of VVT makes it possible to supply a large amount of EGR gas (enrich the air-fuel ratio) in such a manner as to satisfy a demand for raising the catalyst bed temperature while maintaining adequate ignition quality. However, there is a limit to the degree of air-fuel ratio enrichment. Misfiring may occur if the air-fuel ratio is excessively enriched. Therefore, when the amount of internal EGR is to be increased, the range of air-fuel ratio should preferably be predefined while considering both the supply of CO for catalyst bed temperature increase and the suppression of influence of misfiring.

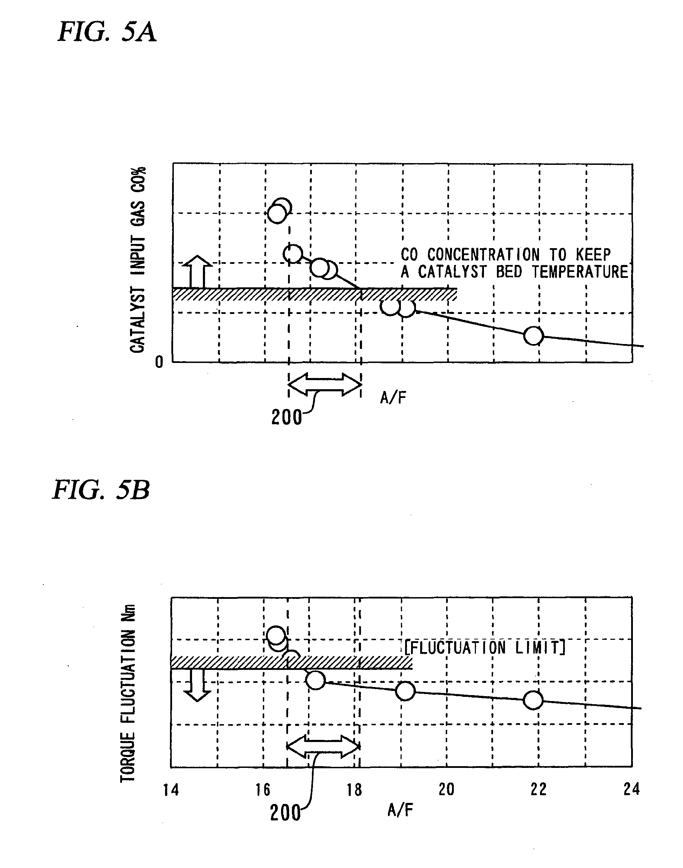

FIGS. 5A and 5B are diagrams illustrating the range of air-fuel ratio within which control should be exercised in accordance with an embodiment of the present invention, concerning the above points. The range indicated by the arrow 200 in FIGS. 5A and 5B, which correlate to the FIGS. 3A and 3B, is the air-fuel ratio range defined in connection with the present embodiment. This air-fuel ratio range is defined to be lower (richer) than an air-fuel ratio required to achieve a demanded CO supply amount and higher (leaner) than an air-fuel ratio causing a misfire. This makes it possible to assure an adequate increase in the catalyst temperature while avoiding excessive richness to inhibit a misfire. For the sake of convenience, this air-fuel ratio range may be hereinafter referred to as the "A/F suitability range."

However, if map control is exercised when the amount of internal EGR is to be adjusted by means of VVT control to remain within the above air-fuel ratio range, deviation such as transition-induced delay or environmental condition changes occurs, and it is extremely difficult to make corrections. As such being the case, the present embodiment monitors the air-fuel ratio, which is obtained from an air-fuel ratio sensor or calculated from an intake air amount and a fuel injection amount, and the torque fluctuation, which is detected from an engine speed fluctuation, and feeds the monitoring results back to the control of the variable valve device (or more specifically the timing of early closing of the exhaust valve 56) in such a manner as to remain within the A/F suitability range. When feedback control is exercised as described above, autonomous model control of VVT can be exercised to achieve combustion while a large amount of EGR is provided.

Meanwhile, the air-fuel ratio may be controlled by means of external EGR. However, the present embodiment, which exercises VVT control to adjust the amount of internal EGR, is at an advantage in that it provides enhanced ignition quality by supplying a high-temperature internal EGR gas, and that it excels in response, or more specifically, the combustion status changes immediately in response to a control operation in which a valve disc positioned immediately before a cylinder is operated. Hence, a significant benefit can be derived from FB control of variable valve timing.

### (3) Countermeasures to be taken when the amount of EGR is insufficient

When VVT autonomous control is exercised as described under (2) above, it is anticipated that the requirements concerning the air-fuel ratio and the requirements concerning the torque fluctuation may not be fully satisfied. More specifically, when VVT control is exercised to increase the amount of internal EGR, it is anticipated that the degree of air-fuel ratio richness might be insufficient although misfiring can be avoided. If the degree of air-fuel ratio richness cannot be adequately increased, the amount of CO supply is insufficient. As a result, the catalyst bed temperature cannot be raised to a desired level.

In view of the above circumstances, the present embodiment addresses the above problem by supplying an EGR gas with an external EGR device. If a turbocharger is provided, the above problem may be addressed by boost pressure control. More specifically, the external EGR device is controlled (e.g., the opening of the EGR valve is adjusted) to supply the deficiency in the amount of EGR gas or the boost pressure of the turbocharger is regulated (or more specifically to adjust the opening of a boost pressure control valve). If the requirements concerning the air-fuel ratio and the requirements concerning the torque fluctuation are still not fully satisfied after the amount of internal EGR is increased in such a manner as to avoid a misfire, the increase in the catalyst bed temperature can be promoted by using a method other than variable valve control, such as the above countermeasures.

### [Details of Process According to Embodiments]

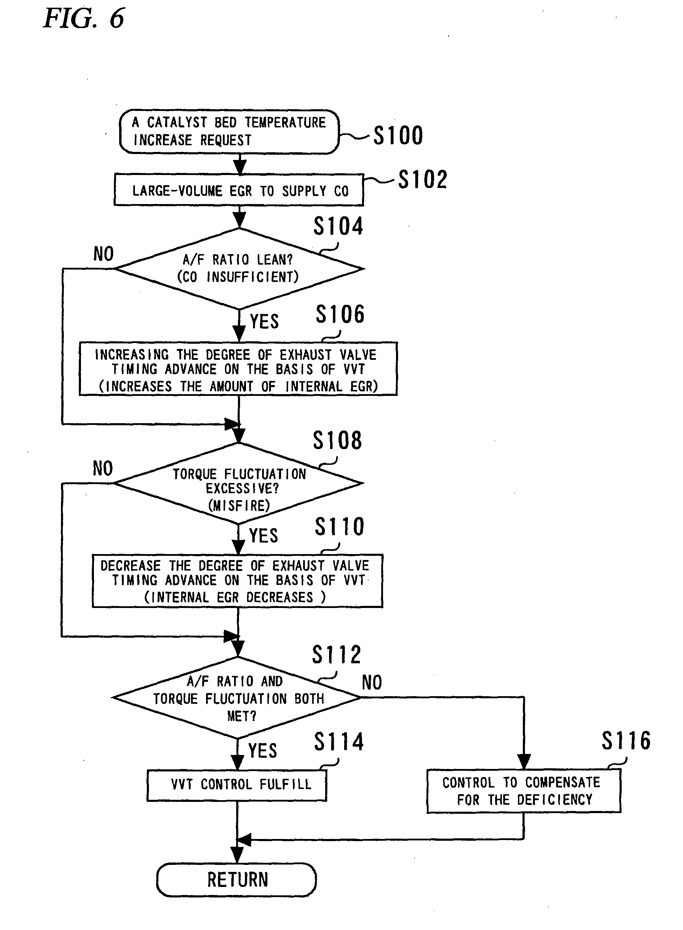

A process performed by the internal combustion engine control device according to an embodiment of the present invention will now be described in detail with reference to FIG. 6. FIG. 6 is a flowchart illustrating a routine that is executed by the ECU 50 in accordance with an embodiment of the present invention.

It is assumed that the routine according to the present embodiment starts (step S100) when a catalyst bed temperature increase request is generated as shown in FIG. 6. When the catalyst bed temperature increase request is generated, the routine starts providing large-volume EGR to supply CO (step S102). More specifically, the ECU 50 controls the intake variable valve device 54 and the exhaust variable valve device 58 in such a manner as to implement the valve opening characteristics of the intake valve 52 and exhaust valve 56, which are described earlier under "(1) Raising a catalyst bed temperature on the basis of variable valve timing (VVT)."

Next, the routine judges whether the air-fuel ratio is lean (step S104). In step S104, the routine judges in accordance with an air-fuel ratio sensor output or an intake air amount and a fuel injection amount whether the air-fuel ratio is leaner than a predetermined value. A value at the lean end of the A/F suitability range, which was described with reference to FIGS. 5A and 5B, may be used as the predetermined value. If the condition of step S104 is established, it is conceivable that the air-fuel ratio is leaner than the lean end of the A/F suitability range. In this instance, it is anticipated that the amount of CO to be supplied may be insufficient.

If the condition of step S104 is established, the routine performs a process of increasing the degree of exhaust valve timing advance on the basis of VVT (step S106). This increases the amount of internal EGR.

After completion of step S106 or if the condition of step S104 is not established, the routine judges whether the torque fluctuation is excessive (step S108). In step S108, the routine causes the ECU 50 to judge whether a predetermined value is exceeded by the amount of torque fluctuation. As mentioned when the configuration of the present embodiment was described, the torque fluctuation amount can be calculated by allowing the ECU 50 to calculate the engine speed in accordance with an output signal of the crank angle sensor 62 and determine the fluctuation of the engine speed. A value equivalent to the fluctuation limit described with reference to FIG. 3B may be used as the predetermined value. If the condition of step S108 is established, the routine performs a process of exercising VVT control in such a manner as to decrease the degree of exhaust valve timing advance for the purpose of inhibiting a misfire (step S110). Upon completion of this step, the amount of internal EGR decreases to provide stable ignition.

After completion of step S110 or if the condition of step S108 is not established, the routine judges whether requirements concerning the air-fuel ratio and torque fluctuation are both met (step S112). If the condition of step S112 is established, the routine can conclude that VVT control has been exercised to fulfill the catalyst bed temperature increase request. Therefore, the routine terminates.

If, on the other hand, the condition of step S112 is not established, the routine exercises control to compensate for the deficiency in the amount of EGR (step S116). In step S116, the routine controls the external EGR device or the boost pressure in such a manner as to perform the control operation described earlier under "(3) Countermeasures to be taken when the amount of EGR is insufficient." Performing this process makes it possible to give priority to misfire inhibition if catalyst temperature increase and misfire inhibition are not simultaneously accomplished although they are both taken into consideration. Further, the insufficient catalyst bed temperature rise due to the deficiency in the amount of EGR gas can be compensated for by means of external EGR or the like. Upon completion of step S116, the routine terminates.

When the catalyst temperature is to be raised, the above-described process can supply a large amount of CO to the catalyst by increasing the amount of EGR. Meanwhile, if it is anticipated that misfiring may occur due to the increase in the amount of EGR, the above-described process can inhibit a misfire by decreasing the degree of timing advance. In addition, the above-described process can adjust the degree of valve closing timing advance of the exhaust valve 56 in such a manner that the air-fuel ratio is within the A/F suitability range. This makes it possible to avoid an excessive increase in the degree of timing advance or timing retard.

Further, when step S102 is performed to raise the catalyst temperature, the above-described process can supply a large amount of CO to the catalyst by increasing the amount of EGR. Meanwhile, if it is anticipated that misfiring may occur due to the increase in the amount of EGR, the above-described process can retard the valve opening timing in step S110 and adjust the degree of timing advance of the exhaust valve 56 while maintaining the air-fuel ratio within a range that does not cause misfiring. When the routine of FIG. 6 is repeatedly executed, automatic valve timing adjustments can be made to achieve a desired combustion state.

In the embodiments described above, the "valve opening timing control means" according to the first or seventh aspect of the present invention is implemented when the ECU 50 controls the exhaust variable valve device 58; and the "detection means" according to the first or seventh aspect of the present invention is implemented when the ECU 50 determines the engine speed from a sensor value of the crank angle sensor 62, detects the torque fluctuation in accordance with the fluctuation in the engine speed, and detects whether a misfire has occurred.

In the embodiments described above, the "advance control means" according to the first aspect of the present invention is implemented when the ECU 50 performs step S102 of the routine shown in FIG. 6; and the "degree-of-advance adjustment means" according to the first aspect of the present invention is implemented when the ECU 50 performs steps S108 and S110 of the routine shown in FIG. 6.

In the embodiments described above, the "advance control means" according to the seventh aspect of the present invention is implemented when the ECU 50 performs step S102 of the routine shown in FIG. 6; and the "degree-of-advance adjustment means" according to the seventh aspect of the present invention is implemented when the ECU 50 performs steps S104, S106, S108 and S110 of the routine shown in FIG. 6.

In the embodiments described above, the "A/F suitability range" described under "(2) Exercising autonomous control (FB control) on the basis of variable valve timing (VVT)" corresponds to the "predetermined range" according to the second aspect of the present invention. In the embodiments described above, the "priority means" according to the sixth aspect of the present invention is implemented when the ECU 50 performs step S112 of the routine shown in FIG. 6; and the "supply means" according to the sixth aspect of the present invention is implemented when the ECU 50 performs step S116.

### [Modifications of Embodiments]

Referring to the details of the process according to the above-described embodiments, the ECU 50 controls the intake variable valve device 54 and exhaust variable valve device 58 in such a manner as to implement the valve opening characteristics of the intake valve 52 and exhaust valve 56 as described under "(1) Raising a catalyst bed temperature on the basis of variable valve timing (VVT)." However, the present invention is not limited to the process described above. Alternatively, only the exhaust valve 56 may close early.

In the above-described embodiments, if the requirements concerning the air-fuel ratio and torque fluctuation are still not met after the amount of internal EGR is increased in such a manner as to avoid a misfire, the increase in the catalyst bed temperature is promoted by using a method other than variable valve control such as described under "(3) Countermeasures to be taken when the amount of EGR is insufficient." However, the present invention is not limited to the use of the above-described approach. For example, an alternative is to basically let the external EGR device play the role of increasing the amount of EGR gas, and compensate the deficiency in the amount of EGR gas which cannot be fully supplied by means of external EGR alone, by increasing the amount of internal EGR by means of VVT control.

The exhaust variable valve device 58 according to the above modified embodiment may vary at least the closing timing of the exhaust valve 56. For example, the following publicly known mechanisms may be used:
(1) A phase change mechanism capable of changing the phase of a camshaft for driving the exhaust valve 56 in such a manner as to continuously advance or retard the opening timing and closing timing while maintaining a fixed operating angle (valve opening period)
(2) An operating angle variable mechanism that continuously changes only the closing timing of the exhaust valve 56 without changing its opening timing in a configuration in which a swing cam or the like is disposed between the exhaust valve 56 and the camshaft
(3) A mechanism capable of opening and closing the valve at arbitrary timing by allowing an electric motor to rotationally drive the camshaft
(4) An electromagnetically driven valve capable of opening and closing at arbitrary timing
   A combination of mechanisms (1) and (2) may also be used.

Referring to the configuration shown in FIG. 1, the diesel engine 10 includes the intake variable valve device 54, which changes the valve opening characteristics of the intake valve 52. However, the present invention is not limited to the above configuration. When only the exhaust valve 56 is to be closed early while the valve opening characteristics of the intake valve 52 are fixed, a normal valve train may be used to drive the intake valve 52.

## Claims

1. A control device for an internal combustion engine (10), **characterized in that** the control device comprises:
valve opening timing control means (50) for controlling the valve closing timing of an exhaust valve (56) in an internal combustion engine (10) equipped with a variable valve device (58) capable of changing the valve opening characteristics of the exhaust valve (56);
detection means (50) for detecting a misfire of the internal combustion engine (10);
advance control means(50) for advancing the valve closing timing of the exhaust valve (56) in such a manner as to increase the amount of internal EGR for the internal combustion engine (10) under predetermined conditions where the temperature of a catalyst installed in an exhaust path (20) of the internal combustion engine (10) is to be raised; and
degree-of-advance adjustment means (50) for decreasing the degree of advance of the valve closing timing of the exhaust valve(56) when a misfire is detected by the detection means (50) after the valve closing timing of the exhaust valve (56) is advanced by the advance control means (50)
wherein the degree-of-advance adjustment means (50) includes means (50) for adjusting the degree of advance of the valve closing timing of the exhaust valve (56) in such a manner that the air-fuel ratio of the internal combustion engine (10) is within a predetermined range,
the predetermined range is an air-fuel ratio range between a first air-fuel ratio and a second air-fuel ratio, which is richer than the first air-fuel ratio,
the first air-fuel ratio is capable of supplying CO to the catalyst to such an extent as to raise the temperature of the catalyst to a level not lower than a predetermined temperature,
the internal combustion engine (10) includes an external EGR device,
the control device for the internal combustion engine further comprising:
means (50) for allowing the external EGR device to supply an EGR gas, when predetermined requirements concerning the air-fuel ratio and torque fluctuation are both not met after the advance control means (50) advances the valve closing timing of the exhaust valve (56) and the degree-of-advance adjustment means retards the valve closing timing of the exhaust valve (56), in such a manner as to compensate for a deficiency that is caused when the degree of advance of the valve closing timing of the exhaust valve (56) is decreased by the degree of advance adjustment means (50).

2. The control device according to claim 1, wherein the second air-fuel ratio causes no misfiring in the internal combustion engine (10).

3. The control device according to any one of claims 1 or 2, wherein the detection means (50) includes means (50) for detecting a torque fluctuation of the internal combustion engine (10); and wherein the predetermined range is an air-fuel ratio range within which the torque fluctuation of the internal combustion engine (10) is not greater than a predetermined value.

## Patentansprüche

1. Steuerungsvorrichtung für einen Verbrennungsmotor (10), **dadurch gekennzeichnet, dass** die Steuerungsvorrichtung umfasst:
ein Ventilöffnungszeit-Steuermittel (50) zum Steuern der Ventilschließzeit eines Auslassventils (56) in einem Verbrennungsmotor (10), der mit einer variablen Ventilvorrichtung (58) ausgestattet ist, welche in der Lage ist, die Ventilöffnungscharakteristik des Auslassventils (56) zu verändern,
ein Detektiermittel (50) zum Detektieren einer Fehlzündung des Verbrennungsmotors (10),
ein Vorverlegungs-Steuermittel (50) zum Vorverlegen der Ventilschließzeit des Auslassventils (56) derart, dass die Menge an interner Abgasrückführung für den Verbrennungsmotor (10) unter vorgegebenen Bedingungen erhöht wird, bei denen die Temperatur eines Katalysators, der in einem Abgasweg (20) des Verbrennungsmotors (10) angebracht ist, erhöht werden soll, und
ein Vorverlegungsgrad-Einstellmittel (50) zum Reduzieren des Grades der Vorverlegung der Ventilschließzeit des Auslassventils (56), wenn von dem Detektiermittel (50) eine Fehlzündung detektiert wird, nachdem die Ventilschließzeit des Auslassventils (56) durch das Vorverlegungs-Steuermittel (50) vorverlegt ist,
wobei das Vorverlegungsgrad-Einstellmittel (50) ein Mittel (50) zum Einstellen des Vorverlegungsgrades der Ventilschließzeit des Auslassventils (56) derart, dass das Luft-Kraftstoff-Verhältnis des Verbrennungsmotors (10) innerhalb eines vorgegebenen Bereichs liegt, umfasst,
der vorgegebene Bereich ein Luft-Kraftstoff-Verhältnisbereich zwischen einem ersten Luft-Kraftstoff-Verhältnis und einem zweiten Luft-Kraftstoff-Verhältnis, das fetter als das erste Luft-Kraftstoff-Verhältnis ist, ist,
das erste Luft-Kraftstoff-Verhältnis in der Lage ist, dem Katalysator CO in einem Maß zuzuführen, dass die Temperatur des Katalysators auf ein Niveau erhöht wird, das nicht unter einer vorgegebenen Temperatur liegt,
der Verbrennungsmotor (10) eine externe Abgasrückführungsvorrichtung umfasst,
wobei die Steuerungsvorrichtung für den Verbrennungsmotor ferner umfasst:
ein Mittel (50) zum Ermöglichen, dass die externe Abgasrückführungsvorrichtung ein Abgasrückführungsgas zuführt, wenn vorgegebene Erfordernisse in Bezug auf das Luft-Kraftstoff-Verhältnis und die Drehmomentschwankung beide nicht erfüllt werden, nachdem das Vorverlegungs-Steuermittel (50) die Ventilschließzeit des Auslassventils (56) vorverlegt hat und das Vorverlegungsgrad-Einstellmittel die Ventilschließzeit des Auslassventils (56) verzögert, derart, dass ein Mangel kompensiert wird, der verursacht wird, wenn der Vorverlegungsgrad der Ventilschließzeit des Auslassventils (56) durch das Vorverlegungsgrad-Einstellmittel (50) reduziert wird.

2. Steuerungsvorrichtung nach Anspruch 1, wobei das zweite Luft-Kraftstoff-Verhältnis keine Fehlzündungen in dem Verbrennungsmotor (10) verursacht.

3. Steuerungsvorrichtung nach einem der Ansprüche 1 oder 2, wobei das Detektiermittel (50) ein Mittel (50) zum Detektieren einer Drehmomentschwankung des Verbrennungsmotors (10) umfasst, und wobei der vorgegebene Bereich ein Luft-Kraftstoff-Verhältnisbereich ist, in dem die Drehmomentschwankung des Verbrennungsmotors (10) nicht größer als ein vorgegebener Wert ist.

## Revendications

1. Dispositif de commande pour un moteur à combustion interne (10), **caractérisé en ce que** le dispositif de commande comprend :
un moyen (50) de commande de réglage de la distribution destiné à commander le réglage de fermeture de soupape d'une soupape d'échappement (56) dans un moteur à combustion interne (10) équipé d'un dispositif de soupapes variables (58) capable de changer les caractéristiques d'ouverture de soupape de la soupape d'échappement (56) ;
un moyen (50) de détection destiné à détecter un raté d'allumage du moteur à combustion interne (10) ;
un moyen (50) de commande d'avance destiné à avancer le réglage de fermeture de soupape de la soupape d'échappement (56) de manière à augmenter le montant recyclage des gaz d'échappement (EGR pour "Exhaust Gas Recirculation") interne pour le moteur à combustion interne (10) dans des conditions prédéterminées où l'on doit élever la température d'un catalyseur installé dans un circuit d'échappement (20) du moteur à combustion interne (10) ; et
un moyen (50) d'ajustement de degré d'avance destiné à diminuer le degré d'avance du réglage de fermeture de soupape de la soupape d'échappement (56) lorsqu'un raté d'allumage a été détecté par le moyen (50) de détection après que le réglage de fermeture de soupape de la soupape d'échappement (56) a été avancé par le moyen (50) de commande d'avance,
dans lequel le moyen (50) d'ajustement de degré d'avance inclut un moyen (50) destiné à ajuster le degré d'avance du réglage de fermeture de soupape de la soupape d'échappement (56) de manière que le rapport air-carburant du moteur à combustion interne (10) soit à l'intérieur d'une plage prédéterminée,
dans lequel la plage prédéterminée est une plage de rapports air-carburant entre un premier rapport air-carburant et un second rapport air-carburant, qui est plus riche que le premier rapport air-carburant,
dans lequel le premier rapport air-carburant est capable de fournir du CO au catalyseur dans une mesure propre à élever la température du catalyseur jusqu'à un niveau qui n'est pas inférieur à une température prédéterminée,
dans lequel le moteur à combustion interne (10) inclut un dispositif externe d'EGR,
le dispositif de commande pour le moteur à combustion interne comprenant en outre :
un moyen (50) destiné à permettre au dispositif externe d'EGR de délivrer du gaz d'EGR, lorsque des exigences prédéterminées concernant le rapport air-carburant et la fluctuation de couple sont à la fois non satisfaites après que le moyen (50) de commande d'avance a avancé le réglage de fermeture de soupape de la soupape d'échappement (56) et que le moyen d'ajustement de degré d'avance a retardé le réglage de fermeture de soupape de la soupape d'échappement (56) de manière à compenser une déficience qui est provoquée lorsque le degré d'avance du réglage de fermeture de soupape de la soupape d'échappement (56) est diminué par le moyen (50) d'ajustement de degré d'avance.

2. Dispositif de commande selon la revendication 1, dans lequel le second rapport air-carburant fait qu'il n'y a pas de raté d'allumage dans le moteur à combustion interne (10).

3. Dispositif de commande selon l'une quelconque des revendications 1 ou 2, dans lequel le moyen (50) de détection inclut un moyen (50) destiné à détecter une fluctuation de couple du moteur à combustion interne (10) ; et dans lequel la plage prédéterminée est une plage de rapports air-carburant à l'intérieur de laquelle la fluctuation de couple du moteur à combustion interne (10) n'est pas plus grande qu'une valeur prédéterminée.
